# EUROPEAN PATENT SPECIFICATION

(11) **EP 4 535 207 B1**
(45) Date of publication and mention of the grant of the patent: **21.10.2026**
(21) Application number: 23830505.6
(22) Date of filing: 30.06.2023
(51) Int. Cl.: G06F 21/57, G06F 21/53, G06F 21/60, G06F 9/455

(54) **CLOUD TECHNOLOGY-BASED TRUSTED EXECUTION SYSTEM AND METHOD**
CLOUD-TECHNOLOGIEBASIERTES VERTRAUENSWÜRDIGES AUSFÜHRUNGSSYSTEM UND -VERFAHREN
SYSTÈME ET PROCÉDÉ D'EXÉCUTION DE CONFIANCE BASÉE SUR UNE TECHNOLOGIE EN NUAGE

(30) Priority: 01.07.2022 CN 202210773428
(43) Date of publication of application: 09.04.2025
(73) Proprietor: Huawei Cloud Computing Technologies Co., Ltd., Guiyang, Guizhou, 550025 (CN)
(72) Inventor: GONG, Lei, Shenzhen, Guangdong 518129 (CN); YU, Haixin, Shenzhen, Guangdong 518129 (CN)
(74) Representative: Maiwald GmbH
(86) International application number: PCT/CN2023/104666
(87) International publication number: WO 2024/002342

(56) References cited:
- CN-A- 107 533 609
- CN-A- 114 117 412
- US-A1- 2018 285 560
- US-A1- 2020 257 794
- US-A1- 2021 133 315
- US-A1- 2021 141 658
- US-A1- 2021 160 225
- US-A1- 2021 397 698
- US-B2- 11 048 800

## Description

### TECHNICAL FIELD

The present invention relates to the field of cloud technologies, and in particular, to a cloud technology-based trusted execution system and method.

### BACKGROUND

As public cloud and hybrid cloud markets become increasingly mature and develop rapidly, security problems gradually become a focus of attention for enterprises. As representatives, governments and the financial industry have developed significant concerns about confidentiality of data security in a gradual cloudification process of services of the governments and the financial industry. In an entire data link, a cloud service provider, an operator, a device provider, a chip provider, and a software provider may steal or tamper with related data. Therefore, how to ensure the utmost trustworthiness and security of customer data becomes a key point of current cloud technology development. Based on the foregoing problem, a trusted execution environment (trusted execution environment, TEE) is provided as a concept for resolving a data privacy problem. A main principle of the trusted execution environment is to create a new environment for processing customer data in an existing execution environment. As long as end-to-end trustworthiness and verifiability of this secure environment are ensured, data security can be ensured. The TEE has been widely applied in intelligent terminal scenarios. For example, fingerprint data of an application used for mobile payment is stored in a dedicated secure operating system for execution, to prevent confidential data from being stolen.

In a cloud scenario, a specific device or area used to perform computation on confidential data of a tenant is referred to as an enclave (Enclave). The tenant cannot directly access the enclave, and performing confidential computation through the enclave can ensure data security of the tenant.

However, currently, the enclave is usually implemented by a virtual instance running on a host machine, and has very limited functions. In addition, the enclave needs to occupy a processor and a memory of the host machine to perform confidential computation. For example, to complete encryption and decryption functions, the enclave can only use the processor and the memory of the host machine for computation. Because a virtual instance of the tenant also runs on the host machine, the enclave occupies the processor and the memory that originally can be provided for the virtual instance of the tenant. Consequently, a service in the host machine is affected. The US 2021133315 A1 refers to unifying hardware trusted execution environment technologies using a virtual secure enclave device. device. It covers receiving enclave commands through a virtual driver, queueing and parsing commands, executing enclave lifecycle operations on the physical hardware TEE, and returning the resulting status or data back to the enclave/application through the virtualization layer.

### SUMMARY

The present invention provides a cloud technology-based trusted execution system and method, to improve confidentiality and efficiency of a computation requirement of a tenant and reduce impact on service performance. The invention is set out in the appended set of claims.

According to a first aspect, the present invention provides a cloud technology-based trusted execution system. The trusted execution system includes a first tenant virtual instance, a first enclave virtual instance, and a hardware accelerator device, a first communication channel is set between the first tenant virtual instance and the first enclave virtual instance, and a second communication channel is set between the first enclave virtual instance and the hardware accelerator device. The first tenant virtual instance sends a first computation request to the first enclave virtual instance through the first communication channel. The first enclave virtual instance receives the first computation request, and invokes the hardware accelerator device based on the first computation request through the second communication channel to perform computation. The first enclave virtual instance may further send, to the first tenant virtual instance through the first communication channel, a first computation result generated by the hardware accelerator device.

The trusted execution system may perform confidential and efficient computation on the first computation request sent by the first tenant virtual instance. The first tenant virtual instance sends the first computation request to the first enclave virtual instance in a process of using a cloud service. To improve computation efficiency, the first enclave virtual instance invokes the hardware accelerator device to perform accelerated computation on the first computation request. To improve computation confidentiality, the first enclave virtual instance sends, to the first tenant virtual instance through the first communication channel, the first computation result generated by the hardware accelerator device. The first enclave virtual instance invokes the hardware accelerator device to perform accelerated computation, so that a resource in a host machine is not additionally occupied, and impact on service performance of the host machine is reduced.

In a possible implementation of the first aspect, a first virtual function VF or a first physical function PF of the hardware accelerator device is directly passed through to the first enclave virtual instance according to a peripheral component interconnect express PCIe protocol, the second communication channel is a pass-through channel based on the PCIe protocol, and the first enclave virtual instance invokes the first virtual function VF or the first physical function PF of the hardware accelerator device to perform computation.

The first enclave virtual instance invokes, in a hardware pass-through manner, a function of the hardware accelerator device for performing computation, so that a hardware acceleration function of the trusted execution system is increased, and efficiency of a computation request is improved.

In a possible implementation of the first aspect, the trusted execution system further includes a virtual instance manager, the virtual instance manager provides a secure module device, and the secure module device obtains computation-required authentication information and provides the authentication information for the first enclave virtual instance.

The secure module device set in the virtual manager in the trusted execution system obtains related authentication information of the first computation request, and provides the authentication information to the first enclave virtual instance. After the authentication information is approved, the first enclave virtual instance starts to perform confidential computation. Through setting of the related authentication information of the first computation request, confidentiality of performing computation by the trusted execution system on the first computation request sent by the first tenant virtual instance can be further improved.

Optionally, the secure module device may obtain the related authentication information of the first computation request from a cloud management platform. The cloud management platform is configured to manage the authentication information, and the authentication information is, for example, tenant account information of the first tenant virtual instance and/or a key related to the account information.

In this possible implementation, the secure module device is further configured to: set the second communication channel between the first enclave virtual instance and the hardware accelerator device, and provide a software development kit SDK for the first enclave virtual instance. The first enclave virtual instance is further configured to invoke the second communication channel based on the SDK, to send computation-related data from the second communication channel to the hardware accelerator device.

The first enclave virtual instance upgrades, by installing the SDK, a function of invoking the hardware accelerator device to perform computation, so that a function can be extended based on an original function, and therefore operation difficulty of a function upgrade of the first enclave virtual instance can be reduced.

In a possible implementation of the first aspect, the virtual instance manager is further configured to provide an accelerator device, the accelerator device is configured to set the second communication channel between the first enclave virtual instance and the hardware accelerator device, and the first enclave virtual instance is further configured to send computation-related data to the hardware accelerator device through the second communication channel.

The virtual instance manager in the trusted execution system provides the accelerator device, the first enclave virtual instance receives the first computation request of the first tenant virtual instance, and the accelerator device sends related data of the first computation request to the hardware accelerator device. In this solution, the hardware acceleration function of the trusted execution system is added through the accelerator device, and the efficiency of the computation request is improved.

In a possible implementation of the first aspect, the trusted execution system further includes a second tenant virtual instance and a second enclave virtual instance, where a third communication channel is set between the second tenant virtual instance and the second enclave virtual instance, and a fourth communication channel is set between the second enclave virtual instance and the hardware accelerator device. The second tenant virtual instance is configured to send a second computation request to the second enclave virtual instance through the third communication channel. The second enclave virtual instance is configured to: receive the second computation request; invoke a second virtual function VF or a second physical function PF of the hardware accelerator device based on the second computation request through the fourth communication channel to perform computation; and send, to the second tenant virtual instance through the third communication channel, a computation result generated by the hardware accelerator device, where the second virtual function VF or the second physical function PF of the hardware accelerator device is directly passed through to the second enclave virtual instance according to the peripheral component interconnect express PCIe protocol, and the fourth communication channel is a pass-through channel based on the PCIe protocol.

The trusted execution system further includes a plurality of tenant virtual instances and a plurality of enclave virtual instances corresponding to the tenant virtual instances. Each enclave virtual instance receives a computation request of the tenant virtual instance, and invokes the hardware accelerator device based on the computation request to perform computation. The hardware accelerator device in the trusted execution system may be used by a single tenant or simultaneously used by a plurality of tenants.

In a possible implementation of the first aspect, the first tenant virtual instance and the first enclave virtual instance run in the host machine, and the hardware accelerator device is inserted into a mainboard slot of the host machine.

The first tenant virtual instance and the first enclave virtual instance in the trusted execution system run in an operating system of the host machine, and the hardware accelerator device is inserted into the mainboard slot of the host machine. The hardware accelerator device can save resources of the host machine, and the impact on the service performance of the host machine is reduced.

In this possible implementation, the hardware accelerator device is a smart card having an independent operating system, memory, and processor.

The smart card may provide a hardware acceleration function for the trusted execution system. The smart card has the independent operating system, memory, and processor, and therefore is more efficient and stable in use performance.

In a possible implementation of the first aspect, the first tenant virtual instance and the first enclave virtual instance run in an operating system of the host machine, and the host machine is connected to the hardware accelerator device through a PCIe high-speed communication bus.

The host machine and the hardware accelerator device in the trusted execution system are connected through the PCIe high-speed communication bus. The high-speed communication bus can improve communication efficiency between the host machine and the hardware accelerator device. The host machine can flexibly use resources in the hardware accelerator device, so that costs are reduced.

In a possible implementation of the first aspect, the computation includes one or any combination of data encryption computation, data decryption computation, data encoding computation, data decoding computation, data compression computation, and data decompression computation.

The accelerated computation performed by the hardware accelerator device in the trusted execution system includes one or any combination of the data encryption computation, the data decryption computation, the data encoding computation, the data decoding computation, the data compression computation, and the data decompression computation, so that different computation requirements of tenant virtual instances can be met.

According to a second aspect, the present invention provides a cloud technology-based trusted execution method. The method is applied to a trusted execution system, the trusted execution system includes a first tenant virtual instance, a first enclave virtual instance, and a hardware accelerator device, a first communication channel is set between the first tenant virtual instance and the first enclave virtual instance, and a second communication channel is set between the first enclave virtual instance and the hardware accelerator device. The method includes the following steps: The first tenant virtual instance sends a first computation request to the first enclave virtual instance through the first communication channel. The first enclave virtual instance receives the first computation request; invokes the hardware accelerator device based on the first computation request through the second communication channel to perform computation; and sends, to the first tenant virtual instance through the first communication channel, a first computation result generated by the hardware accelerator device.

Any one of the second aspect or the implementations of the second aspect is a method implementation corresponding to any one of the first aspect or the implementations of the first aspect. Descriptions in any one of the first aspect or the implementations of the first aspect are applicable to any one of the second aspect or the implementations of the second aspect, and details are not described herein.

According to a third aspect, the present invention provides a computer device. The computer device includes a processor and a memory. The memory is configured to store computer-executable instructions. The processor is configured to execute the computer-executable instructions stored in the memory, to enable the computer device to run a first tenant virtual instance and a first enclave virtual instance to implement the method disclosed in any one of the second aspect and the possible implementations of the second aspect.

According to a fourth aspect, the present invention provides a computer storage medium, including computer-readable instructions. When the computer-readable instructions are executed, a first tenant virtual instance and a first enclave virtual instance are run to implement the method disclosed in any one of the second aspect and the possible implementations of the second aspect.

According to a fifth aspect, the present invention provides a computer program product including instructions. When the computer program product runs on a computer, the computer is enabled to run a first tenant virtual instance and a first enclave virtual instance to perform the method disclosed in any one of the second aspect and the possible implementations of the second aspect.

### BRIEF DESCRIPTION OF DRAWINGS

FIG. 1 is a diagram of an architecture of a cloud data center according to an embodiment of this application;
FIG. 2 is a diagram of a cloud technology-based trusted execution system according to an embodiment of this application;
FIG. 3 is a diagram of data exchange of a cloud technology-based trusted execution system according to an embodiment of this application;
FIG. 4 is a diagram of a structure of implementing a virtual function VF or a physical function PF by a hardware accelerator device according to an embodiment of this application;
FIG. 5 is another diagram of a cloud technology-based trusted execution system according to an embodiment of this application;
FIG. 6 is another diagram of data exchange of a cloud technology-based trusted execution system according to an embodiment of this application;
FIG. 7 is another diagram of a cloud technology-based trusted execution system according to an embodiment of this application;
FIG. 8 is another diagram of data exchange of a cloud technology-based trusted execution system according to an embodiment of this application; and
FIG. 9 is another diagram of a cloud technology-based trusted execution system according to an embodiment of this application.

### DESCRIPTION OF EMBODIMENTS

The following describes technical solutions in embodiments of the present invention with reference to accompanying drawings in embodiments of the present invention. It is clear that the described embodiments are merely a part rather than all of embodiments of the present invention. All other embodiments obtained by a person of ordinary skill in the art based on embodiments of the present invention without creative efforts shall fall within the protection scope of the present invention.

First, terms used in embodiments of this application are explained and described.

### Definitions of acronyms and key terms

A VM (Virtual Machine, virtual machine) refers to a complete software-simulated computer system that has full hardware system functions and that runs in a completely isolated environment. All tasks that can be completed on a server can be implemented on the virtual machine. When creating the virtual machine on the server, a part of a hard disk and a memory capacity of a physical machine needs to be used as a hard disk and a memory capacity of the virtual machine. Each virtual machine has an independent hard disk and operating system. A user of the virtual machine can operate the virtual machine as the user uses the server.

A hypervisor (which acts as a virtual machine manager) is an actual operating system that establishes and maintains a framework for managing a virtual machine and provides many important services for other VxD programs.

A VMM (Virtual Machine Monitor, virtual machine monitor) is another name of a virtual machine manager.

A docker (which acts as a container) uses Linux kernel-supported namespace (namespace) and cgroup technologies to isolate an application (APP) process and dependency packages (running environment bins/libs, which are specifically all files required for running an APP) of the application process in an independent running environment.

An APP (Application, application) is a computer program used to complete one or more specific tasks. The APP runs in a user mode, can interact with a user, and has a visual user interface.

A TEE (Trusted Execution Environment, trusted execution environment) is an independent processing environment that has computing and storage functions and that can provide security and integrity protection.

A CPU (Central Processing Unit, central processing unit) is a computing and control core of a computer system, and is a final execution unit for information processing and program running.

An enclave (enclave) is a specific area for running confidential data of a customer.

A PF (Physical Function, physical function) is used to support a PCI function of SR-IOV, and has a capability of completely configuring or controlling PCIe device resources.

A VF (Virtual Function, virtual function) is a lightweight PCIe function associated with a PF, and can share one or more physical resources with the physical function and another VF associated with the same physical function.

An SDK (Software Development Kit, software development kit) is a collection of development tools used by a software engineer to create application software for a specific software package, software framework, hardware platform, operating system, and the like.

An SMD (Secure Module Device, secure module device) is configured to provide a functional interface to complete an operation request of an enclave.

An AD (Accelerator Device, accelerator device) is a device configured to provide a hardware acceleration capability for an enclave.

PCIe (Peripheral Component Interconnect Express) is a high-speed serial computer expansion bus standard, and is an interface standard used to connect high-speed components.

Embodiments of this application provide a cloud technology-based trusted execution system and method, to improve confidentiality and efficiency of a computation requirement of a tenant and reduce impact on service performance. Details are separately described below.

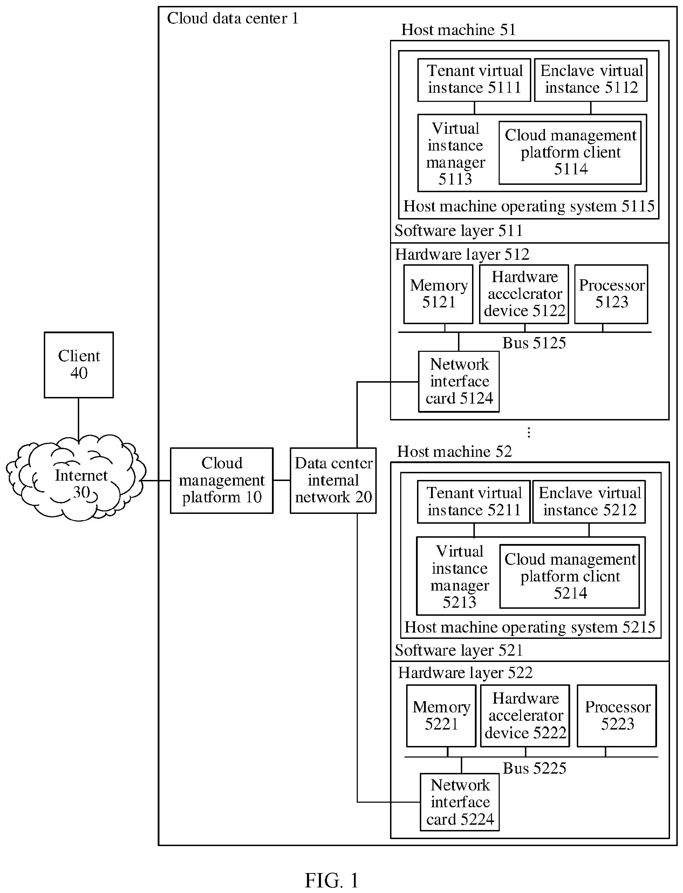

FIG. 1 is a diagram of an architecture of a cloud data center according to an embodiment of this application. As shown in FIG. 1, the cloud data center 1 includes a cloud management platform 10, a data center internal network 20, a client 40, and a plurality of host machines. In FIG. 1, two host machines, for example, a host machine 51 and a host machine 52, are used as an example for description. The host machine 51 and the host machine 52 complete information exchange with the data center internal network 20 and the cloud management platform 10 respectively through a network interface card 5124 and a network interface card 5224. The cloud management platform 10 completes information exchange with the client 40 through the internet 30. The host machine 51 is used as an example for description. The host machine 51 includes a software layer 511 and a hardware layer 512. A tenant virtual instance 5111, an enclave virtual instance 5112, a virtual instance manager 5113, and a cloud management platform client 5114 run on a host machine operating system 5115 at the software layer 511. The hardware layer 512 includes a memory 5121, a hardware accelerator device 5122, a processor 5123, and the network interface card 5124 that are connected to each other through a bus 5125.

The host machine 52 has a structure similar to that of the host machine 51, and details are not described herein.

The tenant virtual instance 5111 and the enclave virtual instance 5112 may be, for example, virtual machines (virtual machines, VMs). Correspondingly, the virtual instance manager 5113 is a virtual machine manager (Hypervisor), and the virtual machine manager is also referred to as a virtual machine monitor (virtual machine monitor, VMM). The tenant virtual instance 5111 and the enclave virtual instance 5112 may be, for example, containers (Dockers). Correspondingly, the virtual instance manager 5113 is a container manager.

Specifically, the cloud management platform 10 provides an access interface (for example, a configuration interface for configuration by a tenant or an API for configuration by the tenant). The tenant of the cloud data center 1 may operate the client 40 to remotely access the access interface, register a cloud account and a password on the cloud management platform 10, and log in to the cloud management platform 10. After authentication on the cloud account and the password by the cloud management platform 10 succeeds, the tenant may further pay on the cloud management platform to select and purchase a virtual instance of a specific specification (processor, memory, and disk). After purchase succeeds, the cloud management platform 10 provides a remote login account and password of the purchased virtual instance, so that the client 40 may remotely log in to the virtual instance, and install and run an application of the tenant in the virtual instance. The cloud management platform client 5114 receives a control plane command sent by the cloud management platform 10, creates the virtual instance on the host machine based on the control plane control command, and performs full life cycle management on the virtual instance. Therefore, the tenant may create, manage, log in to, and operate the virtual instance in the cloud data center 1 through the cloud management platform 10.

Before processing data, the application (application, APP) running on the virtual instance decrypts the data in the memory 5121 of the host machine 51. Consequently, the data is more vulnerable to attacks during processing in the memory 5121. Confidential computation usually uses a hardware-based trusted execution environment (trusted execution environment, TEE) to resolve this problem. The TEE is a secure area inside a central processing unit (central processing unit, CPU). An embedded encryption key and an embedded attestation mechanism are used to ensure security of the TEE, to ensure that the key can be accessed only by authorized application code. If malicious software or other unauthorized code attempts to access the key, or the authorized code is hacked or altered in any manner, the TEE rejects access to the key and cancels computation. In this way, sensitive data may remain in a protected state in the memory until the application indicates the TEE to decrypt the sensitive data for processing. The data cannot be accessed by any user in a decryption process and an entire computation process.

Specifically, in a cloud scenario, when the tenant has a confidential computation requirement, the enclave virtual instance 5112 is synchronously created when the tenant virtual instance 5111 is created at the software layer 511 of the host machine 51. The enclave (Enclave) is a specific area used to run confidential data of a customer, and the enclave virtual instance 5112 is a virtual instance used to perform confidential computation for the customer.

The following describes, with reference to the foregoing architecture of the cloud data center and the concept of confidential computation, the cloud technology-based trusted execution system and method provided in embodiments of this application.

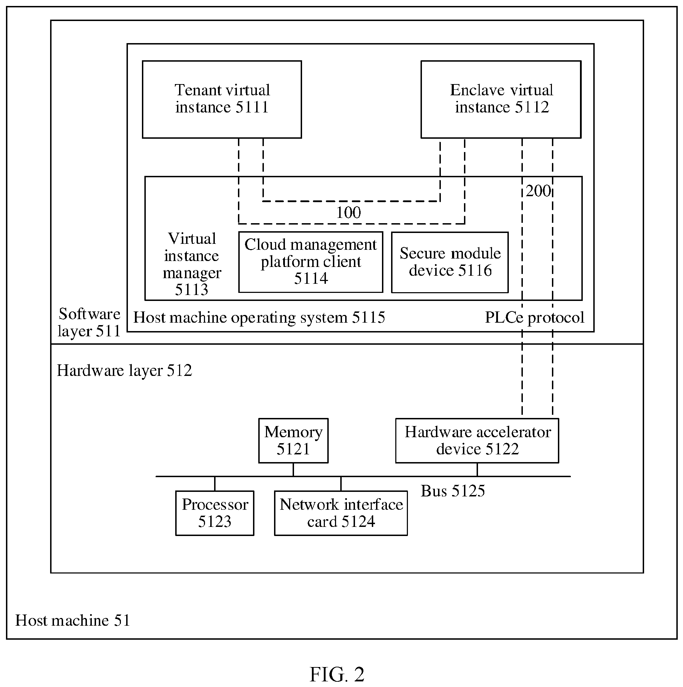

FIG. 2 is a diagram of a cloud technology-based trusted execution system according to an embodiment of this application. The system may be, for example, the host machine 51 or the host machine 52 shown in FIG. 1. Herein, the host machine 51 is used as an example for description. As shown in FIG. 2, the trusted execution system includes a tenant virtual instance 5111, an enclave virtual instance 5112, and a hardware accelerator device 5122. A communication channel 100 is set between the tenant virtual instance 5111 and the enclave virtual instance 5112, both the tenant virtual instance 5111 and the enclave virtual instance 5112 run on a host machine operating system 5115, and a communication channel 200 is set between the enclave virtual instance 5112 and the hardware accelerator device 5122. The tenant virtual instance 5111 sends a computation request to the enclave virtual instance 5112 through the communication channel 100. The enclave virtual instance 5112 invokes the hardware accelerator device 5122 through the communication channel 200 to perform computation, and then returns a computation result to the tenant virtual instance 5111 through the communication channel 100.

Specifically, the hardware accelerator device 5122 may be, for example, a smart card that has an independent operating system, memory, and processor. The hardware accelerator device 5122 may be directly inserted into a mainboard slot of the host machine 51, or the hardware accelerator device 5122 may be connected to the host machine 51 through a PCIe bus. In addition, accelerated computation performed by the hardware accelerator device in the trusted execution system includes one or any combination of data encryption computation, data decryption computation, data encoding computation, data decoding computation, data compression computation, and data decompression computation, so that different computation requirements of the tenant virtual instance 5111 can be met.

Further, the trusted execution system includes a virtual instance manager 5113. The virtual instance manager 5113 is configured to manage the tenant virtual instance 5111 and the enclave virtual instance 5112. The virtual instance manager 5113 further provides a secure module device 5116. The secure module device 5116 is configured to: obtain authentication information required for performing confidential computation by the enclave virtual instance 5112, and provide the authentication information for the enclave virtual instance 5112.

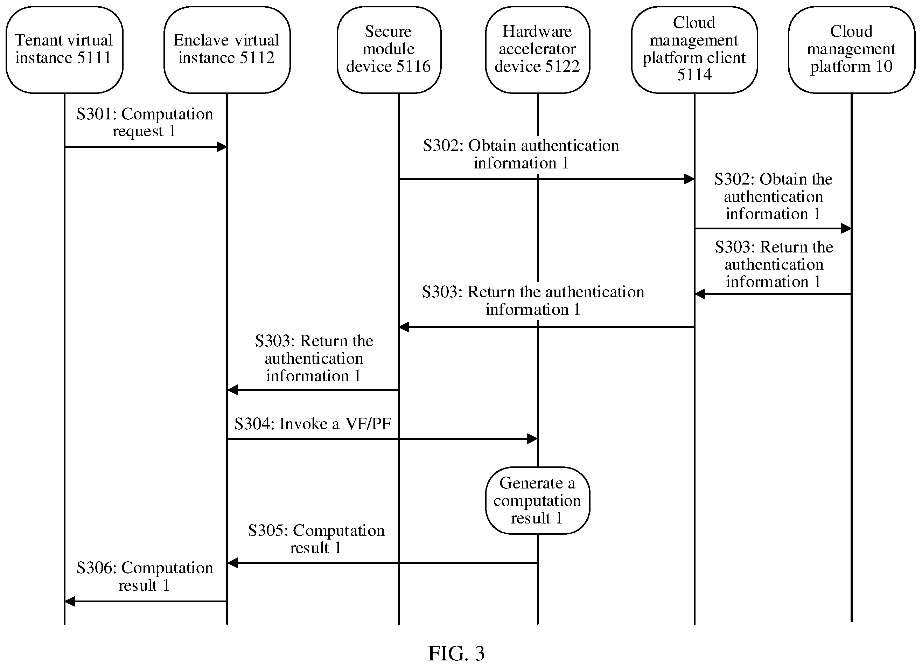

Specifically, a working procedure of the trusted execution system shown in FIG. 2 may be described with reference to FIG. 3. FIG. 3 is a diagram of data exchange of the cloud technology-based trusted execution system according to an embodiment of this application. In a method shown in FIG. 3, it is assumed that a tenant logs in to a cloud management platform 10 and inputs a specification of the to-be-created tenant virtual instance 5111. The cloud management platform 10 notifies a cloud management platform client 5114 of the specification of the to-be-created virtual instance 5111. The virtual instance manager 5113 at which the cloud management platform client 5114 is located creates the virtual instance 5111 in the operating system of the host machine 51, and allocates a virtualized hardware resource in the host machine 51 to the virtual instance 5111. When the tenant has a confidential computation requirement, the tenant may indicate the cloud management platform 10 to create the enclave virtual instance 5112 used in cooperation with the virtual instance 5111. The cloud management platform 10 indicates the cloud management platform client 5114 to create the enclave virtual instance 5112. The virtual instance manager 5113 at which the cloud management platform client 5114 is located creates the enclave virtual instance 5112 in the operating system of the host machine 51, and allocates another virtualized hardware resource in the host machine 51 to the enclave virtual instance 5112. The tenant may determine a specification of the enclave virtual instance 5112 on the cloud management platform 10, and the cloud management platform 10 indicates the cloud management platform client 5114 to create the enclave virtual instance 5112 of the corresponding specification. Alternatively, the tenant does not need to specify a specification of the enclave virtual instance 5112 on the cloud management platform 10, and the enclave virtual instance 5112 may use a default specification that is applicable to a virtual instance of an enclave type and that is on the cloud management platform 10. The enclave virtual instance 5112 is used in cooperation with the virtual instance 5111. The tenant may log in to the virtual instance 5111, but the tenant cannot log in to the enclave virtual instance 5112. When the tenant has the confidential computation requirement in the virtual instance 5111, the virtual instance 5111 generates the confidential computation requirement, and sends the requirement to the enclave virtual instance 5112 for processing.

It should be noted that, except for the tenant, no other tenant or cloud service provider can access or use the enclave virtual instance 5112. The enclave virtual instance 5112 can communicate with the virtual instance 5111 through only the communication channel 100. In addition, the enclave virtual instance 5112 and the virtual instance 5111 have a same life cycle. When the tenant releases the virtual instance 5111, the enclave virtual instance 5112 is also released. In addition, when the enclave virtual instance 5112 is released, memory data corresponding to the enclave virtual instance 5112 is strictly formatted, to ensure that confidential computation information of the tenant is not leaked.

In addition, the enclave virtual instance 5112 pre-stores identity authentication information of the tenant.

For example, if the tenant needs to perform one or any combination of the data encryption computation, the data decryption computation, the data encoding computation, the data decoding computation, the data compression computation, and the data decompression computation in the virtual instance 5111, the virtual instance 5111 generates a confidential computation requirement, and sends the requirement to the enclave virtual instance 5112 for processing.

Because the tenant may log in to the virtual instance 5111, in this embodiment of this application, the virtual instance 5111 may also be referred to as a tenant virtual instance.

As shown in FIG. 3, the working procedure of the trusted execution system is as follows:
Step S301: The tenant virtual instance 5111 sends a computation request 1 to the enclave virtual instance 5112 through the communication channel 100.

When the tenant generates a confidential computation requirement in the virtual instance 5111, the virtual instance manager 5113 receives the requirement, and sends the requirement to the enclave virtual instance 5112 through the communication channel 100. The communication channel 100 is a communication channel established by the virtual instance manager 5113 between the tenant virtual instance 5111 and the enclave virtual instance 5112, and is used to transmit data information between the tenant virtual instance 5111 and the enclave virtual instance 5112.

Step S302: The secure module device 5116 obtains authentication information 1 from the cloud management platform client 5114.

It should be noted that, when the tenant virtual instance 5111 sends the computation request 1 to the enclave virtual instance 5112 through the communication channel 100, the computation request 1 is sent to the enclave virtual instance 5112 through the virtual instance manager 5113. In this case, the secure module device 5116 in the virtual instance manager 5113 may learn that the tenant virtual instance 5111 sends the computation request 1.

Therefore, the secure module device 5116 obtains, from the cloud management platform client 5114, the authentication information 1 corresponding to the tenant virtual instance 5111. Specifically, before purchasing the tenant virtual instance 5111 on the cloud management platform 10, the tenant registers some related personal information. Content of the personal information is, for example, an account, a mobile phone number, an email address, and/or a login password that are/is registered by the tenant on the cloud management platform 10. The personal information is stored on the cloud management platform 10. Before performing confidential computation, the secure module device 5116 obtains the personal information of the tenant from the cloud management platform 10 through the cloud management platform client 5114, and the personal information is used as the authentication information 1 for tenant identity identification.

Step S303: The secure module device 5116 returns the obtained authentication information 1 to the enclave virtual instance 5112.

After the secure module device 5116 obtains the authentication information 1 of the tenant from the cloud management platform 10 through the cloud management platform client 5114, the cloud management platform 10 returns the authentication information 1 of the tenant to the secure module device 5116 through the cloud management platform client 5114, and the secure module device 5116 then returns the obtained authentication information 1 to the enclave virtual instance 5112.

Specifically, after being created, the enclave virtual instance 5112 reserves authentication information 1 of the tenant. After receiving the confidential computation request of the tenant, the enclave virtual instance 5112 needs to verify whether an identity of the tenant is valid. In this case, the enclave virtual instance 5112 determines whether to perform confidential computation by determining, through comparison, whether the reserved authentication information 1 of the tenant matches the authentication information 1 of the tenant that is obtained by the secure module device 5116 from the cloud management platform 10 through the cloud management platform client 5114. If the reserved authentication information 1 matches the obtained authentication information 1, the enclave virtual instance 5112 continues to execute the confidential computation request. If the reserved authentication information 1 does not match the obtained authentication information 1, the enclave virtual instance 5112 refuses to execute the confidential computation request.

Step S304: The enclave virtual instance 5112 invokes a virtual function VF or a physical function PF of the hardware accelerator device 5122 through the communication channel 200 to perform computation.

In this step, when the enclave virtual instance 5112 determines, through comparison, that the authentication information 1 of the tenant that is reserved by the enclave virtual instance 5112 matches the authentication information 1 of the tenant that is obtained by the secure module device 5116 from the cloud management platform 10 through the cloud management platform client 5114, the enclave virtual instance 5112 invokes the virtual function VF or the physical function PF of the hardware accelerator device through the communication channel 200 to perform computation. The communication channel 200 is a communication channel established by the secure module device 5116 between the enclave virtual instance 5112 and the hardware accelerator device 5122 according to a PCIe protocol, and is used for data information between the enclave virtual instance 5112 and the hardware accelerator device 5122.

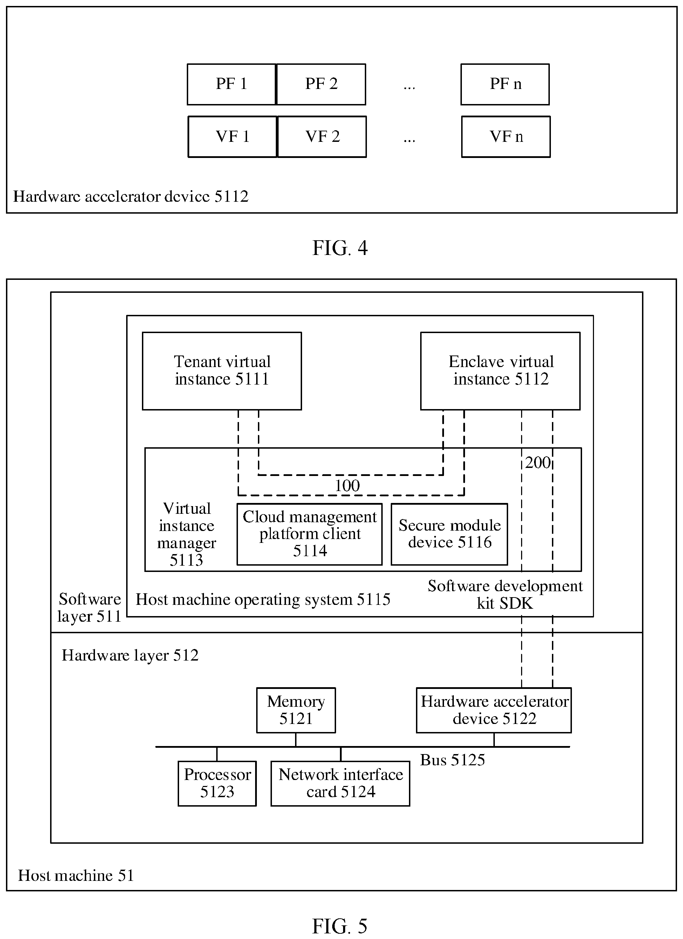

The virtual function (Virtual Function, VF) or the physical function (Physical Function, PF) of the hardware accelerator device 5122 is directly passed through to the enclave virtual instance 5112 according to the peripheral component interconnect express PCIe protocol. FIG. 4 is a diagram of a structure of implementing the virtual function VF or the physical function PF by the hardware accelerator device 5122 according to an embodiment of this application. The hardware accelerator device 5122 may be divided into a plurality of functional modules that implement virtual functions VF 1, VF 2, ..., and VF n, and the VFs may be mounted to different enclave virtual instances to perform accelerated computation for the different enclave virtual instances. Similarly, the hardware accelerator device 5122 may be divided into a plurality of functional modules that implement physical functions PF 1, PF 2, ..., and PF n, and the PFs may be mounted to different enclave virtual instances to perform accelerated computation for the different enclave virtual instances.

For example, the VF 1 may be mounted to the enclave virtual instance 5112.

It should be noted that each VF unit or PF unit is a computation functional unit obtained from the hardware accelerator device 5122 through division according to an SR-IOV protocol. Units are isolated from each other, and each unit may be mounted to a virtual instance by using a pass-through technology for direct use.

Step S305: The hardware accelerator device 5122 returns a computation result 1 to the enclave virtual instance 5112.

After completing computation, the hardware accelerator device 5122 sends the computation result 1 to the enclave virtual instance 5112 through the communication channel 200.

Step S306: The enclave virtual instance 5112 then returns the computation result 1 to the tenant virtual instance 5111.

The enclave virtual instance 5112 sends the computation result 1 to the tenant virtual instance 5111 through the communication channel 100. In this way, an entire confidential computation process is completed.

In this embodiment of this application, the trusted execution system may perform confidential and efficient computation on the computation request sent by the tenant virtual instance. After the computation request of the tenant virtual instance is sent to the enclave virtual instance, the enclave virtual instance invokes the hardware accelerator device in a hardware pass-through manner to perform computation, and returns the result to the enclave virtual instance. The enclave virtual instance then returns the computation result to the tenant virtual instance. The enclave virtual instance invokes the hardware accelerator device to perform computation, so that a resource in the host machine is not additionally occupied, and impact on service performance of the host machine is reduced.

FIG. 5 is another diagram of a cloud technology-based trusted execution system according to an embodiment of this application. As shown in FIG. 5, a difference between the trusted execution system and the embodiment shown in FIG. 2 lies in that a secure module device 5116 provides a software development kit (Software Development Kit, SDK) for an enclave virtual instance 5112, and the enclave virtual instance 5112 invokes a hardware accelerator device 5122 by using the software development kit SDK to perform computation.

Currently, the secure module device 5116 provides limited interface functions, mainly including DescribePCR (for viewing a specified PCR value), ExtendPCR (for a PCR extension operation), LockPCRs (for locking a specified PCR), DescribeNSM (for querying an NSM device status), GetAttestationDoc (for obtaining an attestation document), and GetRandom (for obtaining a random number). The interface functions of the secure module device 5116 can be extended by using the software development kit SDK, so that the secure module device 5116 has an interface function of hardware acceleration.

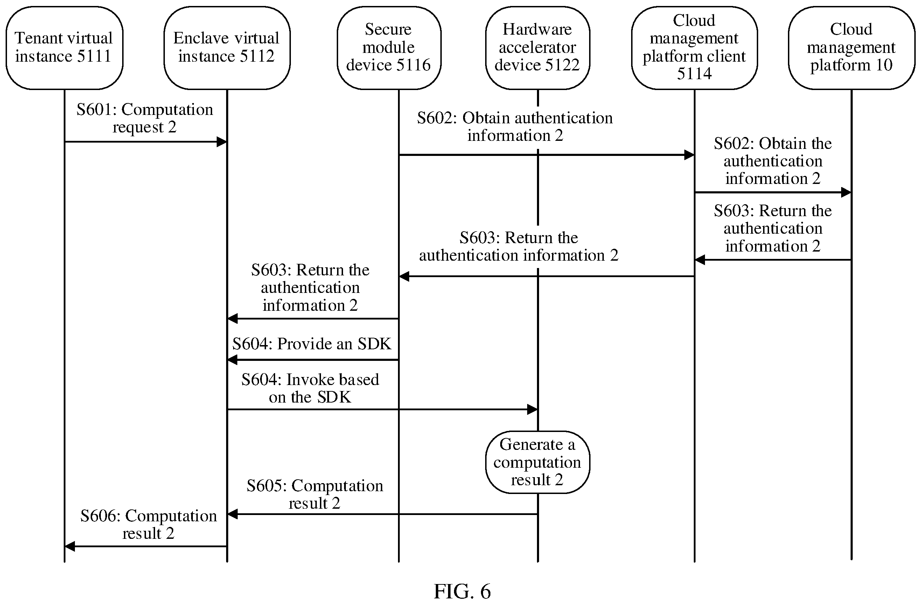

Specifically, a working procedure of the trusted execution system shown in FIG. 5 may be described with reference to FIG. 6. FIG. 6 is another diagram of data exchange of the cloud technology-based trusted execution system according to an embodiment of this application. As shown in FIG. 6, the working procedure of the trusted execution system is as follows:
Step S601: A tenant virtual instance 5111 sends a computation request 2 to the enclave virtual instance 5112 through a communication channel 100.
Step S602: The secure module device 5116 obtains authentication information 2 from a cloud management platform client 5114.
Step S603: The secure module device 5116 returns the obtained authentication information 2 to the enclave virtual instance 5112.

For specific implementations of steps S601 to S603, refer to the descriptions of steps S301 to S303 in FIG. 3. Details are not described herein again.

Step S604: The enclave virtual instance 5112 invokes the hardware accelerator device 5122 through a communication channel 200 to perform computation.

In this embodiment, the communication channel 200 is a communication channel established by the secure module device 5116 between the enclave virtual instance 5112 and the hardware accelerator device 5122 based on the software development kit SDK, and is used for data information between the enclave virtual instance 5112 and the hardware accelerator device 5122. Based on the software development kit SDK, the secure module device 5116 has the interface function of hardware acceleration, so that the enclave virtual instance 5112 may invoke the hardware accelerator device 5122 to perform computation.

Step S605: The hardware accelerator device 5122 returns a computation result 2 to the enclave virtual instance 5112.

Step S606: The enclave virtual instance 5112 then returns the computation result 2 to the tenant virtual instance 5111.

For specific implementations of steps S605 and S606, refer to the descriptions of steps S305 and S306 in FIG. 3. Details are not described herein again.

In this embodiment of this application, the enclave virtual instance in the trusted execution system upgrades, by installing the SDK, a function of invoking the hardware accelerator device to perform computation, so that a function can be extended based on an original function of the secure module device, and therefore operation difficulty of a function upgrade of the enclave virtual instance can be reduced.

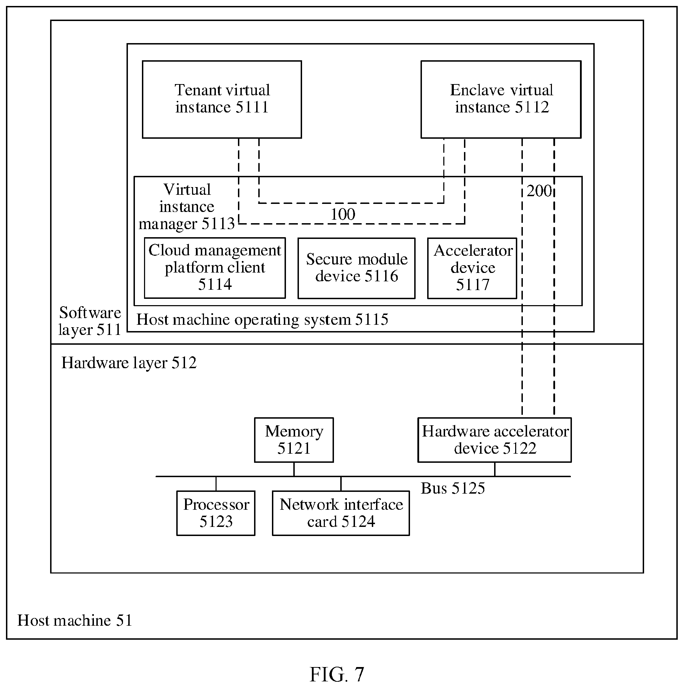

FIG. 7 is another diagram of a cloud technology-based trusted execution system according to an embodiment of this application. As shown in FIG. 7, a difference between the trusted execution system and the embodiment shown in FIG. 2 lies in that a virtual instance manager 5113 provides an accelerator device 5117 for an enclave virtual instance 5112, and the accelerator device 5117 sends a computation request to a hardware accelerator device 5122 for computation.

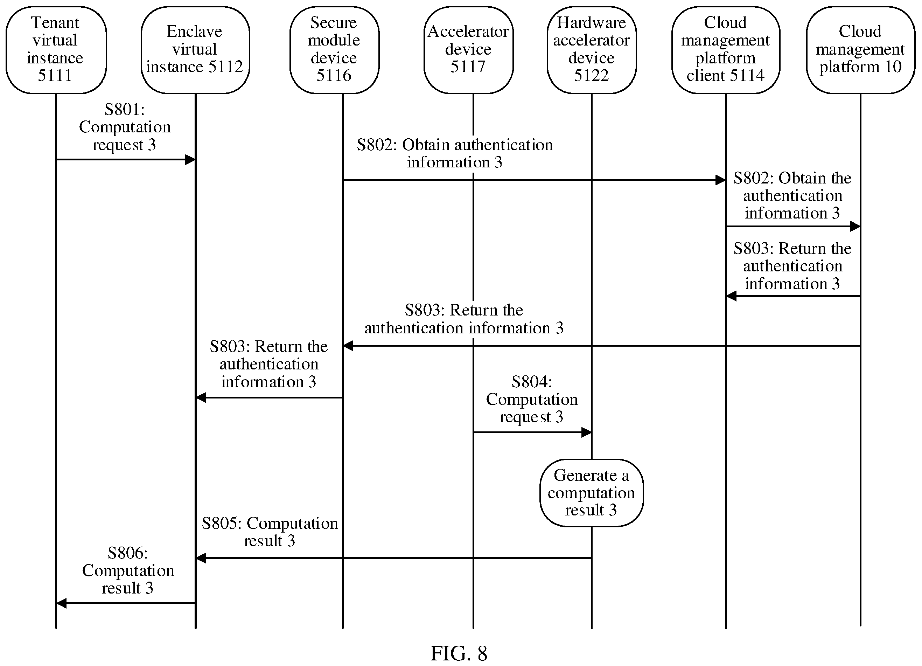

Specifically, a working procedure of the trusted execution system shown in FIG. 7 may be described with reference to FIG. 8. FIG. 8 is another diagram of data exchange of the cloud technology-based trusted execution system according to an embodiment of this application. As shown in FIG. 8, the working procedure of the trusted execution system is as follows:
Step S801: A tenant virtual instance 5111 sends a computation request 3 to the enclave virtual instance 5112 through a communication channel 100.
Step S802: A secure module device 5116 obtains authentication information 3 from a cloud management platform client 5114.
Step S803: The secure module device 5116 returns the obtained authentication information 3 to the enclave virtual instance 5112.

For specific implementations of steps S801 to S803, refer to the descriptions of steps S301 to S303 in FIG. 3. Details are not described herein again.

Step S804: The enclave virtual instance 5112 invokes the hardware accelerator device 5122 through a communication channel 200 to perform computation.

In this embodiment, the accelerator device 5117 is a virtualized accelerator device configured by the virtual instance manager 5113 for the enclave virtual instance 5112 when the enclave virtual instance 5112 is created. The communication channel 200 is a communication channel established by the accelerator device 5117 between the enclave virtual instance 5112 and the hardware accelerator device 5122, and is used for data information between the enclave virtual instance 5112 and the hardware accelerator device 5122. When the tenant virtual instance 5111 sends the computation request 3 to the enclave virtual instance 5112 through the communication channel 100, the computation request 3 is sent to the enclave virtual instance 5112 through the virtual instance manager 5113. In this case, the accelerator device 5117 in the virtual instance manager 5113 may learn that the tenant virtual instance 5111 sends the computation request 3. When the enclave virtual instance 5112 determines, through comparison, that authentication information 3 of a tenant that is reserved by the enclave virtual instance 5112 matches the authentication information 3 of the tenant that is obtained by the secure module device 5116 from a cloud management platform 10 through the cloud management platform client 5114, the accelerator device 5117 sends the computation request 3 to the hardware accelerator device 5122 for computation, to complete a process in which the enclave virtual instance 5112 invokes the hardware accelerator device 5122. Step S805: The hardware accelerator device 5122 returns a computation result 3 to the enclave virtual instance 5112.

Step S806: The enclave virtual instance 5112 then returns the computation result 3 to the tenant virtual instance 5111.

For specific implementations of steps S805 and S806, refer to the descriptions of steps S305 and S306 in FIG. 3. Details are not described herein again.

In this embodiment of this application, the virtual instance manager in the trusted execution system configures the virtualized accelerator device for the enclave virtual instance, and the accelerator device sends the computation request of the tenant virtual instance to the hardware accelerator device for computation, so that the enclave virtual instance has a hardware acceleration function.

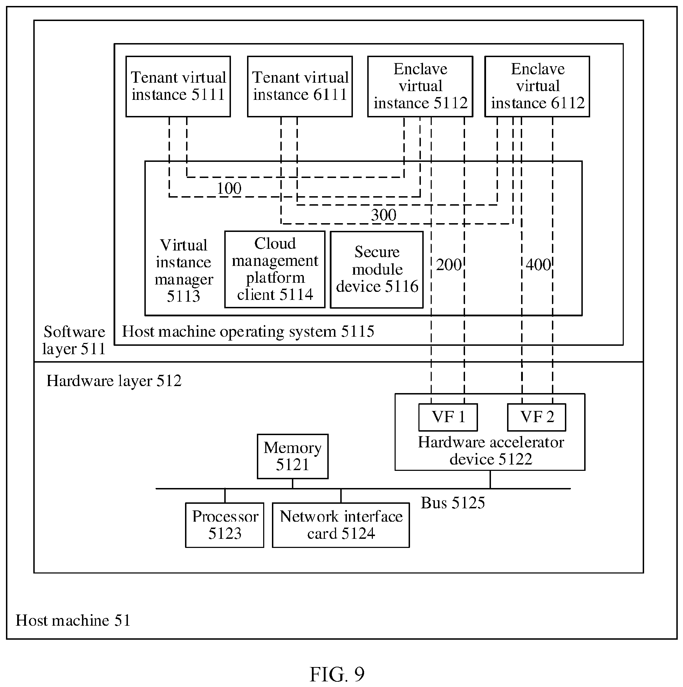

FIG. 9 is another diagram of a cloud technology-based trusted execution system according to an embodiment of this application. As shown in FIG. 9, a difference between the trusted execution system and the embodiment shown in FIG. 2 lies in that the trusted execution system includes two tenant virtual instances 5111 and 6111, two enclave virtual instances 5112 and 6112, and a hardware accelerator device 5122. A communication channel 100 is set between the tenant virtual instance 5111 and the enclave virtual instance 5112, and a communication channel 300 is set between the tenant virtual instance 6111 and the enclave virtual instance 6112. The communication channel 100 (300) is a communication channel established by a virtual instance manager 5113 between the tenant virtual instance 5111 (6111) and the enclave virtual instance 5112 (6112), and is used to transmit data information between the tenant virtual instance 5111 (6111) and the enclave virtual instance 5112 (6112). The tenant virtual instance 5111, the tenant virtual instance 6111, the enclave virtual instance 5112, and the enclave virtual instance 6112 all run on a host machine operating system 5115. A communication channel 200 is set between the enclave virtual instance 5112 and the hardware accelerator device 6122, and a communication channel 400 is set between the enclave virtual instance 6122 and the hardware accelerator device 5122. The communication channel 200 (400) is a communication channel established by a secure module device 5116 between the enclave virtual instance 5112 (6112) and the hardware accelerator device 5122, and is used for data information between the enclave virtual instance 5112 (6112) and the hardware accelerator device 5122. The tenant virtual instance 5111 sends a computation request to the enclave virtual instance 5112 through the communication channel 100. The enclave virtual instance 5112 invokes a virtual function VF 1 of the hardware accelerator device 5122 through the communication channel 200 to perform computation, and then returns a computation result to the tenant virtual instance 5111 through the communication channel 100. The tenant virtual instance 6111 sends a computation request to the enclave virtual instance 6112 through the communication channel 300. The enclave virtual instance 6112 invokes a virtual function VF 2 of the hardware accelerator device 5122 through the communication channel 400 to perform computation, and then returns a computation result to the tenant virtual instance 6111 through the communication channel 200. That is, the trusted execution system can meet a requirement of simultaneously performing confidential computation by a plurality of virtual tenant instances.

Optionally, the trusted execution system may alternatively be implemented by using a computer cluster including a plurality of computer devices. This is not limited in embodiments of the present invention.

In addition, an embodiment of the present invention further provides a computer storage medium, including computer-readable instructions. When the computer-readable instructions are executed, the method performed by the trusted execution system is implemented.

An embodiment of the present invention further provides a computer program product including instructions. When the computer program product runs on a computer, the computer is enabled to perform the method performed by the trusted execution system.

Based on the descriptions of the foregoing implementations, a person skilled in the art may clearly understand that the present invention may be implemented by using software in addition to necessary universal hardware, or certainly by using dedicated hardware, including a dedicated integrated circuit, a dedicated CPU, a dedicated memory, a dedicated component, and the like. Generally, all functions completed by a computer program can be easily implemented by using corresponding hardware, and a specific hardware structure used to implement a same function may be in various forms, for example, in a form of an analog circuit, a digital circuit, or a dedicated circuit. However, in the present invention, a software program implementation is a better implementation in most cases. Based on such an understanding, the technical solutions of the present invention essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of the present invention.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedure or functions according to embodiments of the present invention are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A cloud technology-based trusted execution system, comprising a first tenant virtual instance, a first enclave virtual instance, and a hardware accelerator device (5122), wherein a first communication channel is set between the first tenant virtual instance and the first enclave virtual instance, and a second communication channel is set between the first enclave virtual instance and the hardware accelerator device (5122), wherein
the first tenant virtual instance is configured to send a first computation request to the first enclave virtual instance through the first communication channel; and
the first enclave virtual instance is configured to: receive the first computation request; invoke the hardware accelerator device (5122) based on the first computation request through the second communication channel to perform computation; and send, to the first tenant virtual instance through the first communication channel, a first computation result generated by the hardware accelerator device (5122)
wherein
a first virtual function ,VF, or a first physical function ,PF, of the hardware accelerator device (5122) is directly passed through to the first enclave virtual instance according to a peripheral component interconnect express ,PCIe, protocol, the second communication channel is a pass-through channel based on the PCIe protocol, and the first enclave virtual instance invokes the first virtual function VF or the first physical function PF of the hardware accelerator device (5122) to perform computation.

2. The system according to claim 1, further comprising a virtual instance manager (5113), wherein
the virtual instance manager (5113) is configured to provide a secure module device (5116); and
the secure module device (5116) is configured to: obtain computation-required authentication information, and provide the authentication information for the first enclave virtual instance.

3. The system according to claim 2, wherein
the secure module device (5116) is further configured to: set the second communication channel between the first enclave virtual instance and the hardware accelerator device (5122), and provide a software development kit, SDK, for the first enclave virtual instance; and
the first enclave virtual instance is further configured to invoke the second communication channel based on the,SDK, to send computation-related data from the second communication channel to the hardware accelerator device (5122).

4. The system according to claim 2, wherein
the virtual instance manager (5113) is further configured to provide an accelerator device (5117);
the accelerator device (5117) is configured to set the second communication channel between the first enclave virtual instance and the hardware accelerator device (5122); and
the first enclave virtual instance is further configured to send computation-related data to the hardware accelerator device (5122) through the second communication channel.

5. The system according to any one of claims 1 to 4, further comprising a second tenant virtual instance and a second enclave virtual instance, wherein a third communication channel is set between the second tenant virtual instance and the second enclave virtual instance, and a fourth communication channel is set between the second enclave virtual instance and the hardware accelerator device (5122), wherein
the second tenant virtual instance is configured to send a second computation request to the second enclave virtual instance through the third communication channel; and
the second enclave virtual instance is configured to: receive the second computation request; invoke a second virtual function ,VF, or a second physical function ,PF, of the hardware accelerator device (5122) based on the second computation request through the fourth communication channel to perform computation; and send, to the second tenant virtual instance through the third communication channel, a computation result generated by the hardware accelerator device, (5122) wherein the second virtual function ,VF, or the second physical function ,PF, of the hardware accelerator device (5122) is directly passed through to the second enclave virtual instance according to the peripheral component interconnect express ,PCIe, protocol, and the fourth communication channel is a pass-through channel based on the ,PCIe, protocol.

6. The system according to any one of claims 1 to 5, wherein the first tenant virtual instance and the first enclave virtual instance run in a host machine (51, 52), and the hardware accelerator device (5122) is inserted into a mainboard slot of the host machine (51, 52).

7. The system according to claim 6, wherein the hardware accelerator device (5122) is a smart card having an independent operating system, memory, and processor.

8. The system according to any one of claims 1 to 5, wherein the first tenant virtual instance and the first enclave virtual instance run in a host machine (51, 52), and the host machine (51, 52) is connected to the hardware accelerator device (5122) through a PCIe bus.

9. The system according to any one of claims 1 to 8, wherein the computation comprises one or any combination of data encryption computation, data decryption computation, data encoding computation, data decoding computation, data compression computation, and data decompression computation.

10. A cloud technology-based trusted execution method, wherein the method is applied to a trusted execution system, the trusted execution system comprises a first tenant virtual instance, a first enclave virtual instance, and a hardware accelerator device (5122), a first communication channel is set between the first tenant virtual instance and the first enclave virtual instance, a second communication channel is set between the first enclave virtual instance and the hardware accelerator device (5122), and the method comprises the following steps:
sending (S301), by the first tenant virtual instance, a first computation request to the first enclave virtual instance through the first communication channel; and
receiving, by the first enclave virtual instance, the first computation request; invoking (S304) the hardware accelerator device (5122) based on the first computation request through the second communication channel to perform computation; and sending (S306), to the first tenant virtual instance through the first communication channel, a first computation result generated by the hardware accelerator device (5122),
wherein
a first virtual function ,VF, or a first physical function ,PF, of the hardware accelerator device (5122) is directly passed through to the first enclave virtual instance according to a peripheral component interconnect express PCIe protocol, the second communication channel is a pass-through channel based on the PCIe protocol, and the first enclave virtual instance invokes the first virtual function VF or the first physical function PF of the hardware accelerator device (5122) to perform computation.

11. The method according to claim 10, wherein the system further comprises a virtual instance manager (5113), the virtual instance manager (5113) is configured to provide a secure module device (5116), and the method further comprises:
obtaining, by the secure module device (5116), computation-required authentication information; and providing the authentication information for the first enclave virtual instance.

12. The method according to claim 11, wherein the method further comprises:
setting, by the secure module device (5116), the second communication channel between the first enclave virtual instance and the hardware accelerator device (5122); and providing a software development kit,SDK, for the first enclave virtual instance; and
invoking, by the first enclave virtual instance, the second communication channel based on the SDK, to send computation-related data from the second communication channel to the hardware accelerator device (5122).

13. The method according to claim 11, wherein the virtual instance manager (5113) is further configured to provide an accelerator device (5117), and the method further comprises:
setting, by the accelerator device (5117), the second communication channel between the first enclave virtual instance and the hardware accelerator device (5122); and
sending, by the first enclave virtual instance, computation-related data to the hardware accelerator device (5122) through the second communication channel.

## Patentansprüche

1. Cloud-Technologiebasiertes vertrauenswürdiges Ausführungssystem, umfassend eine erste virtuelle Mandanteninstanz, eine erste virtuelle Enklaveninstanz und eine Hardwarebeschleunigervorrichtung (5122), wobei zwischen der ersten virtuellen Mandanteninstanz und der ersten virtuellen Enklaveninstanz ein erster Kommunikationskanal eingerichtet ist und zwischen der ersten virtuellen Enklaveninstanz und der Hardwarebeschleunigervorrichtung (5122) ein zweiter Kommunikationskanal eingerichtet ist, wobei
die erste virtuelle Mandanteninstanz dazu konfiguriert ist, über den ersten Kommunikationskanal eine erste Berechnungsanfrage an die erste virtuelle Enklaveninstanz zu senden; und
die erste virtuelle Enklaveninstanz zu Folgendem konfiguriert ist: Empfangen der ersten Berechnungsanfrage; Aufrufen der Hardwarebeschleunigervorrichtung (5122) basierend auf der ersten Berechnungsanfrage über den zweiten Kommunikationskanal, um eine Berechnung durchzuführen; und Senden eines durch die Hardwarebeschleunigervorrichtung (5122) generierten ersten Berechnungsergebnisses an die erste virtuelle Mandanteninstanz über den ersten Kommunikationskanal,
wobei
eine erste virtuelle Funktion, VF, oder eine erste physische Funktion, PF, der Hardwarebeschleunigervorrichtung (5122) gemäß einem Protokoll zur Expressverbindung peripherer Komponenten, PCIe-Protokoll, direkt an die erste virtuelle Enklaveninstanz weitergeleitet wird, der zweite Kommunikationskanal ein auf dem PCIe-Protokoll basierender Durchgangskanal ist und die erste virtuelle Enklaveninstanz die erste virtuelle Funktion VF oder die erste physische Funktion PF der Hardwarebeschleunigervorrichtung (5122) aufruft, um eine Berechnung durchzuführen.

2. System nach Anspruch 1, ferner umfassend einen virtuellen Instanzverwalter (5113), wobei
der virtuelle Instanzverwalter (5113) dazu konfiguriert ist, eine sichere Modulvorrichtung (5116) bereitzustellen; und
die sichere Modulvorrichtung (5116) zu Folgendem konfiguriert ist: Erlangen von berechnungserforderlichen Authentifizierungsinformationen und Bereitstellen der Authentifizierungsinformationen für die erste virtuelle Enklaveninstanz.

3. System nach Anspruch 2, wobei
die sichere Modulvorrichtung (5116) ferner zu Folgendem konfiguriert ist: Einrichten des zweiten Kommunikationskanals zwischen der ersten virtuellen Enklaveninstanz und der Hardwarebeschleunigervorrichtung (5122) und Bereitstellen eines Softwareentwicklungskits, SDK, für die erste virtuelle Enklaveninstanz; und
die erste virtuelle Enklaveninstanz ferner dazu konfiguriert ist, den zweiten Kommunikationskanal basierend auf dem SDK aufzurufen, um berechnungsbezogene Daten von dem zweiten Kommunikationskanal an die Hardwarebeschleunigervorrichtung (5122) zu senden.

4. System nach Anspruch 2, wobei
der virtuelle Instanzverwalter (5113) ferner dazu konfiguriert ist, eine Beschleunigervorrichtung (5117) bereitzustellen;
die Beschleunigervorrichtung (5117) dazu konfiguriert ist, den zweiten Kommunikationskanal zwischen der ersten virtuellen Enklaveninstanz und der Hardwarebeschleunigervorrichtung (5122) einzurichten; und
die erste virtuelle Enklaveninstanz ferner dazu konfiguriert ist, über den zweiten Kommunikationskanal berechnungsbezogene Daten an die Hardwarebeschleunigervorrichtung (5122) zu senden.

5. System nach einem der Ansprüche 1 bis 4, ferner umfassend eine zweite virtuelle Mandanteninstanz und eine zweite virtuelle Enklaveninstanz, wobei zwischen der zweiten virtuellen Mandanteninstanz und der zweiten virtuellen Enklaveninstanz ein dritter Kommunikationskanal eingerichtet ist und zwischen der zweiten virtuellen Enklaveninstanz und der Hardwarebeschleunigervorrichtung (5122) ein vierter Kommunikationskanal eingerichtet ist, wobei
die zweite virtuelle Mandanteninstanz dazu konfiguriert ist, über den dritten Kommunikationskanal eine zweite Berechnungsanfrage an die zweite virtuelle Enklaveninstanz zu senden; und
die zweite virtuelle Enklaveninstanz zu Folgendem konfiguriert ist: Empfangen der zweiten Berechnungsanfrage; Aufrufen einer zweiten virtuellen Funktion, VF, oder einer zweiten physischen Funktion, PF, der Hardwarebeschleunigervorrichtung (5122) basierend auf der zweiten Berechnungsanfrage über den vierten Kommunikationskanal, um eine Berechnung durchzuführen; und Senden eines durch die Hardwarebeschleunigervorrichtung (5122) generierten Berechnungsergebnisses an die zweite virtuelle Mandanteninstanz über den dritten Kommunikationskanal, wobei die zweite virtuelle Funktion, VF, oder die zweite physische Funktion, PF, der Hardwarebeschleunigervorrichtung (5122) gemäß dem Protokoll zur Expressverbindung peripherer Komponenten, PCIe-Protokoll, direkt an die zweite virtuelle Enklaveninstanz weitergeleitet wird und der vierte Kommunikationskanal ein auf dem PCIe-Protokoll basierender Durchgangskanal ist.

6. System nach einem der Ansprüche 1 bis 5, wobei die erste virtuelle Mandanteninstanz und die erste virtuelle Enklaveninstanz in einer Host-Maschine (51, 52) laufen und die Hardwarebeschleunigervorrichtung (5122) in einem Mainboardsteckplatz der Host-Maschine (51, 52) eingesetzt ist.

7. System nach Anspruch 6, wobei die Hardwarebeschleunigervorrichtung (5122) eine Chipkarte mit einem unabhängigen Betriebssystem, einem unabhängigen Speicher und einem unabhängigen Prozessor ist.

8. System nach einem der Ansprüche 1 bis 5, wobei die erste virtuelle Mandanteninstanz und die erste virtuelle Enklaveninstanz in einer Host-Maschine (51, 52) laufen und die Host-Maschine (51, 52) über einen PCIe-Bus mit der Hardwarebeschleunigervorrichtung (5122) verbunden ist.

9. System nach einem der Ansprüche 1 bis 8, wobei die Berechnung eines oder eine beliebige Kombination von Datenverschlüsselungsberechnung, Datenentschlüsselungsberechnung, Datencodierungsberechnung, Datendecodierungsberechnung, Datenkomprimierungsberechnung und Datendekomprimierungsberechnung umfasst.

10. Cloud-Technologiebasiertes vertrauenswürdiges Ausführungsverfahren, wobei das Verfahren auf ein vertrauenswürdiges Ausführungssystem angewendet wird, das vertrauenswürdige Ausführungssystem eine erste virtuelle Mandanteninstanz, eine erste virtuelle Enklaveninstanz und eine Hardwarebeschleunigervorrichtung (5122) umfasst, zwischen der ersten virtuellen Mandanteninstanz und der ersten virtuellen Enklaveninstanz ein erster Kommunikationskanal eingerichtet ist, zwischen der ersten virtuellen Enklaveninstanz und der Hardwarebeschleunigervorrichtung (5122) ein zweiter Kommunikationskanal eingerichtet ist und das Verfahren die folgenden Schritte umfasst:
Senden (S301), durch die erste virtuelle Mandanteninstanz, einer ersten Berechnungsanfrage an die erste virtuelle Enklaveninstanz über den ersten Kommunikationskanal; und
Empfangen, durch die erste virtuelle Enklaveninstanz, der ersten Berechnungsanfrage; Aufrufen (S304) der Hardwarebeschleunigervorrichtung (5122) basierend auf der ersten Berechnungsanfrage über den zweiten Kommunikationskanal, um eine Berechnung durchzuführen; und Senden (S306) eines durch die Hardwarebeschleunigervorrichtung (5122) generierten ersten Berechnungsergebnisses an die erste virtuelle Mandanteninstanz über den ersten Kommunikationskanal,
wobei
eine erste virtuelle Funktion, VF, oder eine erste physische Funktion, PF, der Hardwarebeschleunigervorrichtung (5122) gemäß einem Protokoll zur Expressverbindung peripherer Komponenten, PCIe-Protokoll, direkt an die erste virtuelle Enklaveninstanz weitergeleitet wird, der zweite Kommunikationskanal ein auf dem PCIe-Protokoll basierender Durchgangskanal ist und die erste virtuelle Enklaveninstanz die erste virtuelle Funktion VF oder die erste physische Funktion PF der Hardwarebeschleunigervorrichtung (5122) aufruft, um eine Berechnung durchzuführen.

11. Verfahren nach Anspruch 10, wobei das System ferner einen virtuellen Instanzverwalter (5113) umfasst und der virtuelle Instanzverwalter (5113) dazu konfiguriert ist, eine sichere Modulvorrichtung (5116) bereitzustellen, und wobei das Verfahren ferner Folgendes umfasst:
Erlangen, durch die sichere Modulvorrichtung (5116), von berechnungserforderlichen Authentifizierungsinformationen; und
Bereitstellen der Authentifizierungsinformationen für die erste virtuelle Enklaveninstanz.

12. Verfahren nach Anspruch 11, wobei das Verfahren ferner Folgendes umfasst:
Einrichten, durch die sichere Modulvorrichtung (5116), des zweiten Kommunikationskanals zwischen der ersten virtuellen Enklaveninstanz und der Hardwarebeschleunigervorrichtung (5122);
und Bereitstellen eines Softwareentwicklungskits, SDK, für die erste virtuelle Enklaveninstanz; und
Aufrufen, durch die erste virtuelle Enklaveninstanz, des zweiten Kommunikationskanals basierend auf dem SDK, um berechnungsbezogene Daten von dem zweiten Kommunikationskanal an die Hardwarebeschleunigervorrichtung (5122) zu senden.

13. Verfahren nach Anspruch 11, wobei der virtuelle Instanzverwalter (5113) ferner dazu konfiguriert ist, eine Beschleunigervorrichtung (5117) bereitzustellen, und das Verfahren ferner Folgendes umfasst:
Einrichten, durch die Beschleunigervorrichtung (5117), des zweiten Kommunikationskanals zwischen der ersten virtuellen Enklaveninstanz und der Hardwarebeschleunigervorrichtung (5122); und
Senden, durch die erste virtuelle Enklaveninstanz, von berechnungsbezogenen Daten an die Hardwarebeschleunigervorrichtung (5122) über den zweiten Kommunikationskanal.

## Revendications

1. Système d'exécution de confiance basée sur une technologie en nuage, comprenant une première instance virtuelle de locataire, une première instance virtuelle d'enclave et un dispositif d'accélération matérielle (5122), dans lequel un premier canal de communication est établi entre la première instance virtuelle de locataire et la première instance virtuelle d'enclave, et un deuxième canal de communication est établi entre la première instance virtuelle d'enclave et le dispositif d'accélération matérielle (5122), dans lequel
la première instance virtuelle de locataire est configurée pour envoyer une première requête de calcul à la première instance virtuelle d'enclave à travers le premier canal de communication ; et
la première instance virtuelle d'enclave est configurée pour :
recevoir la première requête de calcul ; invoquer le dispositif d'accélération matérielle (5122) sur la base de la première requête de calcul à travers le deuxième canal de communication pour réaliser le calcul ; et envoyer, à la première instance virtuelle de locataire, à travers le premier canal de communication, un premier résultat de calcul généré par le dispositif d'accélération matérielle (5122)
dans lequel
une première fonction virtuelle, VF, ou une première fonction physique, PF, du dispositif d'accélération matérielle (5122) est directement transmise à la première instance virtuelle d'enclave selon un protocole d'interconnexion de composant périphérique express, PCIe, le deuxième canal de communication est un canal de transmission basé sur le protocole PCIe, et la première instance virtuelle d'enclave invoque la première fonction virtuelle, VF, ou la première fonction physique, PF, du dispositif d'accélération matérielle (5122) pour réaliser le calcul.

2. Système selon la revendication 1, comprenant en outre un gestionnaire d'instance virtuelle (5113), dans lequel
le gestionnaire d'instance virtuelle (5113) est configuré pour fournir un dispositif de module sécurisé (5116) ; et
le dispositif de module sécurisé (5116) est configuré pour : obtenir des informations d'authentification requises pour le calcul et fournir les informations d'authentification pour la première instance virtuelle d'enclave.

3. Système selon la revendication 2, dans lequel
le dispositif de module sécurisé (5116) est en outre configuré pour : établir le deuxième canal de communication entre la première instance virtuelle d'enclave et le dispositif d'accélération matérielle (5122), et fournir un kit de développement logiciel, SDK, pour la première instance virtuelle d'enclave ; et
la première instance virtuelle d'enclave est en outre configurée pour invoquer le deuxième canal de communication sur la base du SDK, pour envoyer des données liées au calcul, à partir du deuxième canal de communication, au dispositif d'accélération matérielle (5122).

4. Système selon la revendication 2, dans lequel
le gestionnaire d'instance virtuelle (5113) est en outre configuré pour fournir un dispositif d'accélération (5117) ;
le dispositif d'accélération (5117) est configuré pour établir le deuxième canal de communication entre la première instance virtuelle d'enclave et le dispositif d'accélération matérielle (5122) ; et
la première instance virtuelle d'enclave est en outre configurée pour envoyer les données liées au calcul au dispositif d'accélération matérielle (5122) à travers le deuxième canal de communication.

5. Système selon l'une quelconque des revendications 1 à 4, comprenant en outre une seconde instance virtuelle de locataire et une seconde instance virtuelle d'enclave, dans lequel un troisième canal de communication est établi entre la seconde instance virtuelle de locataire et la seconde instance virtuelle d'enclave, et un quatrième canal de communication est établi entre la seconde instance virtuelle d'enclave et le dispositif d'accélération matérielle (5122), dans lequel
la seconde instance virtuelle de locataire est configurée pour envoyer une seconde requête de calcul à la seconde instance virtuelle d'enclave à travers le troisième canal de communication ; et
la seconde instance virtuelle d'enclave est configurée pour : recevoir la seconde requête de calcul ; invoquer une seconde fonction virtuelle, VF, ou une seconde fonction physique, PF, du dispositif d'accélération matérielle (5122) sur la base de la seconde requête de calcul à travers le quatrième canal de communication pour réaliser le calcul ; et envoyer, à la seconde instance virtuelle de locataire à travers le troisième canal de communication, un résultat de calcul généré par le dispositif d'accélération matérielle (5122), dans lequel la seconde fonction virtuelle, VF, ou la seconde fonction physique, PF, du dispositif d'accélération matérielle (5122) est directement transmise à la seconde instance virtuelle d'enclave selon le protocole d'interconnexion de composant périphérique express, PCIe, et le quatrième canal de communication est un canal de transmission basé sur le protocole PCIe.

6. Système selon l'une quelconque des revendications 1 à 5, dans lequel la première instance virtuelle de locataire et la première instance virtuelle d'enclave s'exécutent dans une machine hôte (51, 52), et le dispositif d'accélération matérielle (5122) est inséré dans un emplacement de carte mère de la machine hôte (51, 52).

7. Système selon la revendication 6, dans lequel le dispositif d'accélération matérielle (5122) est une carte à puce ayant un système d'exploitation, une mémoire et un processeur indépendants.

8. Système selon l'une quelconque des revendications 1 à 5, dans lequel la première instance virtuelle de locataire et la première instance virtuelle d'enclave s'exécutent dans une machine hôte (51, 52), et la machine hôte (51, 52) est connectée au dispositif d'accélération matérielle (5122) à travers un bus PCIe.

9. Système selon l'une quelconque des revendications 1 à 8, dans lequel le calcul comprend un ou une quelconque combinaison des éléments suivants : le calcul de chiffrement de données, le calcul de déchiffrement de données, le calcul de codage de données, le calcul de décodage de données, le calcul de compression de données et le calcul de décompression de données.

10. Procédé d'exécution de confiance basée sur une technologie en nuage, dans lequel le procédé est appliqué à un système d'exécution de confiance, le système d'exécution de confiance comprend une première instance virtuelle de locataire, une première instance virtuelle d'enclave et un dispositif d'accélération matérielle (5122), un premier canal de communication est établi entre la première instance virtuelle de locataire et la première instance virtuelle d'enclave, un deuxième canal de communication est établi entre la première instance virtuelle d'enclave et le dispositif d'accélération matérielle (5122), et le procédé comprend les étapes suivantes :
l'envoi (S301), par la première instance virtuelle de locataire, d'une première requête de calcul à la première instance virtuelle d'enclave à travers le premier canal de communication ; et
la réception, par la première instance virtuelle d'enclave, de la première requête de calcul ; l'invocation (S304) du dispositif d'accélération matérielle (5122) sur la base de la première requête de calcul à travers le deuxième canal de communication pour réaliser le calcul ; et l'envoi (S306), à la première instance virtuelle de locataire, à travers le premier canal de communication, d'un premier résultat de calcul généré par le dispositif d'accélération matérielle (5122),
dans lequel
une première fonction virtuelle, VF, ou une première fonction physique, PF, du dispositif d'accélération matérielle (5122) est directement transmise à la première instance virtuelle d'enclave selon un protocole d'interconnexion de composant périphérique express, PCIe, le deuxième canal de communication est un canal de transmission basé sur le protocole PCIe, et la première instance virtuelle d'enclave invoque la première fonction virtuelle, VF, ou la première fonction physique, PF, du dispositif d'accélération matérielle (5122) pour réaliser le calcul.

11. Procédé selon la revendication 10, dans lequel le système comprend en outre un gestionnaire d'instance virtuelle (5113), le gestionnaire d'instance virtuelle (5113) est configuré pour fournir un dispositif de module sécurisé (5116), et le procédé comprend en outre :
l'obtention, par le dispositif de module sécurisé (5116), d'informations d'authentification requises pour le calcul ; et la fourniture des informations d'authentification pour la première instance virtuelle d'enclave.

12. Procédé selon la revendication 11, dans lequel le procédé comprend en outre :
l'établissement, par le dispositif de module sécurisé (5116), du deuxième canal de communication entre la première instance virtuelle d'enclave et le dispositif d'accélération matérielle (5122) ; et la fourniture d'un kit de développement logiciel, SDK, pour la première instance virtuelle d'enclave ; et
l'invocation, par la première instance virtuelle d'enclave, du deuxième canal de communication sur la base du SDK, pour envoyer des données liées au calcul, à partir du deuxième canal de communication, au dispositif d'accélération matérielle (5122).

13. Procédé selon la revendication 11, dans lequel le gestionnaire d'instance virtuelle (5113) est en outre configuré pour fournir un dispositif d'accélération (5117), et le procédé comprend en outre :
l'établissement, par le dispositif d'accélération (5117), du deuxième canal de communication entre la première instance virtuelle d'enclave et le dispositif d'accélération matérielle (5122) ; et
l'envoi, par la première instance virtuelle d'enclave, de données liées au calcul au dispositif d'accélération matérielle (5122) à travers le deuxième canal de communication.
